# EUROPÄISCHE PATENTSCHRIFT

(11) **EP 0 658 459 B1**
(45) Veröffentlichungstag und Bekanntmachung des Hinweises auf die Patenterteilung: **04.06.1997**
(21) Anmeldenummer: 94118807.0
(22) Anmeldetag: 30.11.1994
(51) Int. Cl.: B60R 21/16

(54) **Aufprallschutzvorrichtung für Insassen eines Kraftfahrzeuges**
Collision protection device for vehicle passengers
Dispositif de protection pour les occupants de véhicules

(30) Priorität: 18.12.1993 DE 4343331; 08.01.1994 DE 4400380
(43) Veröffentlichungstag der Anmeldung: 21.06.1995
(73) Patentinhaber: Dr.Ing. h.c. F. Porsche Aktiengesellschaft, 70435 Stuttgart (DE); PHOENIX AIRBAG GmbH, 31137 Hildesheim (DE)
(72) Erfinder: Heinz, Martin, Dipl.Ing., D-70182 Stuttgart (DE); Schwan, Norbert, D-71229 Leonberg (DE); Gumprecht, Michael, Dipl. Ing., D-31174 Schellerten (DE)

(56) Entgegenhaltungen:
- EP-A- 0 314 867
- EP-A- 0 611 683
- DE-A- 4 240 227

## Beschreibung

Die Erfindung betrifft eine Aufprallschutzvorrichtung für Insassen eines Kraftfahrzeuges mit einem aus einem Gewebe gefertigten Luftsack, der sich aus einem Oberteil, einem Unterteil und mehreren innerhalb des Luftsackes angeordneten Fangbändern, die zwischen dem Oberteil und dem Unterteil des Luftsackes verlaufen, zusammensetzt, wobei die Fangbänder durch in Richtung Innenraum abgestellte Gewebeabschnitte von an der Innenseite des Oberteils und des Unterteils angebrachten Verstärkungsteilen gebildet werden und die abgestellten Gewebeabschnitte sich etwa in einem mittleren Bereich zwischen Oberteil und Unterteil überlappen und durch eine Fügestelle verbunden, insbesondere vernäht, sind.

Eine gattungsgemäße Aufprallschutzvorrichtung ist aus der DE-A-42 40 227 (Fig. 3) bekannt. Dabei sind je nach benötigter Form des Luftsackes zwei oder noch mehr Fangbänder erforderlich, beispielsweise auch in Verbindung mit einer doppellagigen Ausführung gemäß EP-A-0 611 683 (Fig. 5C) Aus konstruktiv vorgegebenen Gründen kann nun bei entsprechenden Belastungen ein Fangband unter Umständen nicht so umgesetzt werden, daß eine ausreichende Festigkeit gewährleistet ist.

Die Aufgabe der Erfindung besteht deshalb darin, insbesondere extrem flache Luftsackausführungen mittels hochbelasteter Fangbandkonstruktionen zu ermöglichen.

Gelöst wird diese Aufgabe gemäß Kennzeichen des Anspruchs 1 dadurch, daß am Oberteil und Unterteil jeweils zwei Verstärkungsteile mit in Richtung Innenraum abgestellten Gewebeabschnitten vorgesehen, wobei die einander gegenüberliegenden Gewebeabschnitte der jeweils zwei Verstärkungsteile in der gemeinsam überlappenden Fügestelle miteinander verbunden, insbesondere vernäht, sind.

Im Bereich der gemeinsamen Fügestelle gibt es für die einzelnen Gewebeabschnitte mehrere Möglichkeiten der Überlappung, wobei die nun näher beschriebenen Überlappungsvarianten (A, B) hinsichtlich der Aufgabenstellung besonders zweckmäßige Gestaltungsformen beinhalten.
A) Die in Richtung Innenraum abgestellten Gewebeabschnitte sind in der gemeinsamen Fügestelle so angeordnet, daß jeweils ein von dem Oberteil abgestellter Gewebeabschnitt mit einem von dem Unterteil abgestellten Gewebeabschnitt aneinanderzuliegen kommt.
B) Die in Richtung Innenraum abgestellten Gewebeabschnitte sind in der gemeinsamen Fügestelle so angeordnet, daß nur ein vom Oberteil abgestellter Gewebeabschnitt und ein vom Unterteil abgestellter Gewebeabschnitt aneinanderliegt.

Eine zusätzliche Maßnahme besteht darin, daß die die Fangbänder bildenden Verstärkungen des Oberteils bzw. Unterteils als Flammschutz für den Luftsack wirken (EP-A-0 314 867).

Die Erfindung wird nun anhand von zwei Ausführungsbeispielen unter Bezugnahme auf schematische Zeichnungen näher erläutert. Es zeigen:
- Fig. 1: eine doppellagige Fangbandausbildung gemäß Variante A sowie
- Fig. 2: eine doppellagige Fangbandausbildung gemäß Variante B.

Im Hinblick auf diese Figuren gilt folgende Bezugsziffernliste:
- 1: Oberteil
- 1': Oberteil
- 2: Unterteil
- 2': Unterteil
- 3: Verstärkungsteil
- 3': Verstärkungsteil
- 4: Verstärkungsteil
- 4': Verstärkungsteil
- 5: Verstärkungsteil
- 5': Verstärkungsteil
- 6: Verstärkungsteil
- 6': Verstärkungsteil
- 7: Gewebeabschnitt
- 7': Gewebeabschnitt
- 8: Gewebeabschnitt
- 8': Gewebeabschnitt
- 9: Gewebeabschnitt
- 9': Gewebeabschnitt
- 10: Gewebeabschnitt
- 10': Gewebeabschnitt
- 11: Fügestelle
- 11': Fügestelle
- 12: Verbindungsnaht
- 12': Verbindungsnaht

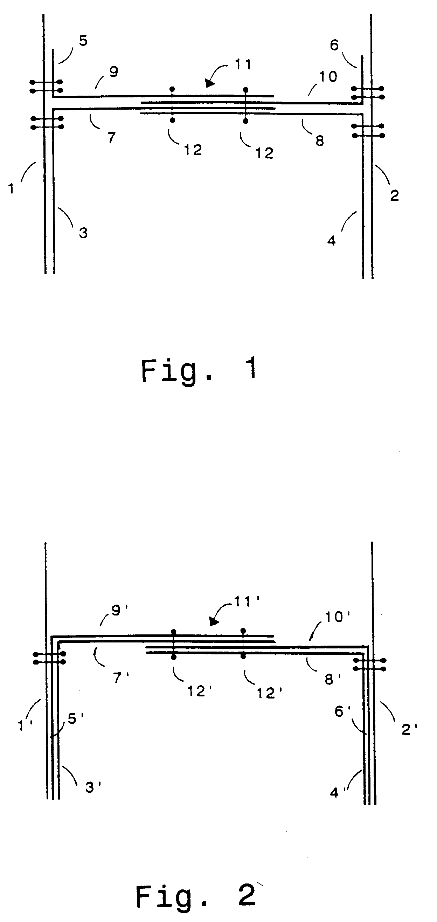

Nach Fig. 1 sind an dem Oberteil (1) des Luftsackes zwei Verstärungsteile (3, 5) angebracht, und zwar in entgegengesetzter Richtung. Das gleiche Anordnungsprinzip gilt auch für die Verstärkungsteile (4, 6) des Unterteils (2). Die jeweils zwei Verstärkungsteile (3, 5) bzw. (4, 6) stellen in Richtung Innenraum Gewebeabschnitte (7, 9) bzw. (8, 10) ab. In der gemeinsamen Fügestelle (11) sind diese ingesamt vier Gewebeabschnitte so angeordnet, daß jeweils ein von dem Oberteil (1) abgestellter Gewebeabschnitt (7) bzw. (9) mit einem von den Unterteil (2) abgestellten Gewebeabschnitt (8) bzw. (10) aneinanderzuliegen kommt (alternierende Überlappungsanordnung).

Nach Fig. 2 sind an dem Oberteil (1') des Luftsackes ebenfalls zwei Verstärkungsteile (3', 5') angebracht, die hier jedoch doppellagig in einer Richtung verlaufen. Das gleiche Anordnungsprinzip ist auch bei den Verstärkungsteilen (4', 6') des Unterteils (2') verwirklicht. Selbstverständlich können diese Verstärkungsteile auch nach dem Prinzip gemäß Fig. 1 mit dem Oberteil bzw. Unterteil verbunden sein. Die abgestellten Gewebeabschnitte (7', 9') bzw. (8', 10') der jeweils zwei Verstärkungsteile (3', 5') bzw. (4', 6') sind im Rahmen dieses Ausführungsbeispieles in der gemeinsamen Fügestelle (11') so angeordnet, daß nur ein vom Oberteil (1') abgestellter Gewebeabschnitt (7') und ein vom Unterteil (2') abgestellter Gewebeabschnit (10') aneinanderliegt.

Erfindungswesentlich ist, daß die Fangbandlagen mindestens in der Fügestelle (11, 11') miteinander verbunden sind.

Bei beiden Ausführungsbeispielen wirken die Verstärkungsteile (3, 5; 3', 5'; 4, 6; 4', 6') des Oberteils (1, 1') bzw. Unterteils (2, 2') als Flammschutz für den Luftsack.

## Patentansprüche

1. Aufprallschutzvorrichtung für Insassen eines Kraftfahrzeuges mit einem aus einem Gewebe gefertigten Luftsack, der sich aus einem Oberteil (1, 1'), einem Unterteil (2, 2') und mehreren innerhalb des Luftsackes angeordneten Fangbändern, die zwischen dem Oberteil und dem Unterteil des Luftsackes verlaufen, zusammensetzt, wobei die Fangbänder durch in Richtung Innenraum abgestellte Gewebeabschnitte (7, 7', 8, 8', 9, 9', 10, 10') von an der Innenseite des Oberteils und des Unterteils angebrachten Verstärkungsteilen (3, 3', 4, 4', 5, 5', 6, 6') gebildet werden und die abgestellten Gewebeabschnitte sich etwa in einem mittleren Bereich zwischen Oberteil und Unterteil überlappen und durch eine Fügestelle (11, 11') verbunden, insbesondere vernäht (12, 12'), sind, dadurch gekennzeichnet, daß am Oberteil (1, 1') und Unterteil (2, 2') jeweils zwei Verstärkungsteile (3, 5; 3', 5') bzw. (4, 6; 4', 6') mit in Richtung Innenraum abgestellten Gewebeabschnitten (7, 9; 7', 9') bzw. (8, 10; 8', 10') vorgesehen sind, wobei die einander gegenüberliegenden Gewebeabschnitte der jeweils zwei Verstärkungsteile in der gemeinsam überlappenden Fügestelle (11, 11') miteinander verbunden, insbesondere vernäht, sind.

2. Aufprallschutzvorrichtung nach Anspruch 1, dadurch gekennzeichnet, daß die in Richtung Innenraum abgestellten Gewebeabschnitte (7, 9; 8, 10) in der gemeinsamen Fügestelle (11) so angeordnet sind, daß jeweils ein von dem Oberteil (1) abgestellter Gewebeabschnitt (7) bzw. (9) mit einem von dem Unterteil (2) abgestellten Gewebeabschnitt (8) bzw. (10) aneinanderzuliegen kommt.

3. Aufprallschutzvorrichtung nach Anspruch 1, dadurch gekennzeichnet, daß die in Richtung Innenraum abgestellten Gewebeabschnitte (7', 9'; 8', 10') in der gemeinsamen Fügestelle (11') so angeordnet sind, daß nur ein vom Oberteil (1') abgestellter Gewebeabschnitt (7') und ein vom Unterteil (2') abgestellter Gewebeabschnitt (10') aneinanderliegt.

## Claims

1. A collision protection device for passengers in a motor vehicle, having an airbag manufactured from fabric and composed of an upper part (1, 1'), a lower part (2, 2') and a number of rebound straps which are arranged inside the airbag and run between the upper and lower parts of the airbag, being formed by portions (7, 7', 8, 8', 9, 9', 10, 10') of fabric turned down in the direction of the interior from reinforcement parts (3, 3', 4, 4', 5, 5', 6, 6') fitted to the inside of the upper and lower parts, whilst the turned-down portions of fabric overlap in about the middle region between the upper and lower parts and are connected, especially stitched (12, 12') at a junction (11, 11'),
characterized in that
on both the upper part (1, 1') and lower part (2, 2') two reinforcement parts (3, 5; 3', 5') resp. (4, 6; 4', 6') are provided, having portions of fabric (7, 9; 7', 9') resp. (8, 10; 8', 10') turned down in the direction of the interior, the portions of fabric lying opposite one another from every two reinforcement parts being connected, especially stitched together in the junction (11, 11') where they overlap one another.

2. A collision protection device as in Claim 1, characterized in that the portions (7, 9; 8, 10) of fabric turned down in the direction of the interior are so arranged in the common junction (11) that every time one portion (7) resp. (9) of fabric turned down from the upper part (1) and one portion (8) resp. (10) of fabric turned down from the lower part (2) come to lie against one another.

3. A collision protection device as in Claim 1, characterized in that the portions (7', 9'; 8', 10') of fabric turned down in the direction of the interior are so arranged in the common junction (11') that only one portion (7') of fabric turned down from the upper part (1') and one portion (10') of fabric turned down from the lower part (2') lie against one another.

## Revendications

1. Dispositif de protection contre les chocs pour les occupants d'un véhicule automobile, comprenant un sac gonflable qui est fabriqué en un tissu et qui se compose d'une partie supérieure (1,1'), d'une partie inférieure (2,2') et de plusieurs bandes de garde qui sont disposées à l'intérieur du sac gonflable et s'étendent entre la partie supérieure et la partie inférieure de celui-ci, les bandes de garde étant formées par des morceaux de tissu (7,7',8,8',9,9',10,10'), qui sont rabattus en direction de la cavité intérieure et qui font partie de pièces de renforcement (3,3',4,4',5,5',6,6') placées sur la face interne de la partie supérieure et de la partie inférieure, et les morceaux de tissu rabattus se recouvrant à peu près dans une région médiane entre la partie supérieure et la partie inférieure et étant réunis, en particulier cousus (en 12,12'), par une jointure (11,11'), caractérisé en ce qu'il est prévu, sur chacune des parties supérieure (1,1') et inférieure (2,2'), deux pièces de renforcement (3,5;3'5') et (4,6;4',6') comportant des morceaux de tissu (7,9;7',9') (8,10;8',10') rabattus en direction de la cavité intérieure, les morceaux de tissu mutuellement opposés de chaque paire de pièces de renforcement étant réunis, en particulier cousus l'un à l'autre, dans la zone commune de jonction à recouvrement (11,11').

2. Dispositif de protection contre les chocs selon la revendication 1, caractérisé en ce que les morceaux de tissu (7,9;8,10) rabattus en direction de la cavité intérieure sont disposés, dans la zone commune de jonction (11), de sorte que chaque morceau de tissu rabattu (7) ou (9) de la partie supérieure (1) soit appliqué contre un morceau de tissu rabattu (8) ou (10) de la partie inférieure (2).

3. Dispositif de protection contre les chocs selon la revendication 1, caractérisé en ce que les morceaux de tissu (7',9';8',10') rabattus en direction de la cavité intérieure sont disposés, dans la zone commune de jonction (11'), de sorte qu'il n'y ait qu'un morceau de tissu rabattu (7') de la partie supérieure (1') et un morceau de tissu rabattu (10') de la partie inférieure (2') à être appliqués l'un contre l'autre.
